Europäisches Patentamt

European Patent Office

Office européen des brevets

(19)

(11) Veröffentlichungsnummer: **0 261 486**
B1

(12) ## EUROPÄISCHE PATENTSCHRIFT

(45) Veröffentlichungstag der Patentschrift:
13.06.90

(51) Int. Cl.⁵: **C09D 7/12**, C09D 5/44

(21) Anmeldenummer: **87113000.1**

(22) Anmeldetag: **05.09.87**

(54) Verfahren zur Katalysierung kationischer Lackbindemittel.

(30) Priorität: **19.09.86 AT 2511/86**

(43) Veröffentlichungstag der Anmeldung:
**30.03.88 Patentblatt 88/13**

(45) Bekanntmachung des Hinweises auf die Patenterteilung:
**13.06.90 Patentblatt 90/24**

(84) Benannte Vertragsstaaten:
**AT DE ES FR GB IT**

(56) Entgegenhaltungen:
**US-A- 3 859 266**
**US-A- 4 484 994**

(73) Patentinhaber: **Vianova Kunstharz Aktiengesellschaft,
A-8402 Werndorf(AT)**

(72) Erfinder: **Paar, Willibald, Dr. Chem., Schanzelgasse 19,
A-8010 Graz(AT)**
Erfinder: **Gmoser, Johann, Radegunderstrasse 30,
A-8045 Graz(AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Katalysierung von kationischen Lackbindemitteln, insbesondere von Materialien, wie sie für die kathodische Elektrotauchlackierung verwendet werden.

Kathodisch abscheidbare Elektrotauchlackbindemittel werden zu einem wesentlichen Teil durch Umesterung, Umamidierung bzw. Umurethanisierung oder durch Reaktion endständiger Doppelbindungen bei erhöhter Temperatur vernetzt.

Es ist bekannt, daß Vernetzungsreaktionen dieser Art durch Metallverbindungen katalysiert werden. Eine solche Katalyse ist im Falle der Härtung von kathodisch abgeschiedenen Lackfilmen praktisch in allen Fällen notwendig, um das von der Praxis geforderte Eigenschaftsbild zu erreichen.

Die wichtigsten in der Praxis verwendeten Katalysatoren sind Verbindungen des vierwertigen Zinns, welches im wesentlichen als Dibutylzinnoxid $(C_4H_9)_2$ SnO oder als Dibutylzinndilaurat $(C_4H_9)_2Sn$ $(OCOC_{12}H_{25})_2$ eingesetzt wird.

Alle derzeit für diesen Zweck eingesetzten Katalysatoren weisen jedoch in kathodisch abscheidbaren Elektrotauchlacken wesentliche Nachteile auf.

So stellt das Dibutylzinnoxid eine feste Substanz dar, welche in entsprechend fein verteilter Form eingearbeitet werden muß und erst nach Auflösung zur Wirksamkeit kommt. Beim Einsatz dieses Katalysators sind daher längere Homogenisierungszeiten notwendig.

Bei Verwendung von Dibutylzinndilaurat wird durch Hydrolyse Säure freigesetzt, die sich insbesonders beim Betrieb von Elektrotauchanlagen als störend erweisen kann. Überdies zeigen die derzeit eingesetzten Katalysatoren im allgemeinen eine schlechte Verträglichkeit mit den als Bindemittel eingesetzten Harzen. Dies führt in vielen Fällen zu einer Beeinträchtigung der Lagerfähigkeit, vor allem der verdünnten Badmaterialien, wie sie zur Ergänzung bei Elektrotauchanlagen eingesetzt werden.

Es wurde nun gefunden, daß die genannten Nachteile vermieden werden können, wenn man als Katalysator Kondensationsprodukte des Dibutylzinnoxids mit Hydroxylverbindungen einsetzt. Diese Kondensationsprodukte lassen sich in einfacher Weise herstellen und können so formuliert werden, daß auch in der Kälte harzverträgliche Produkte erhalten werden, die keine störenden Substanzen abspalten und auch einen ausreichenden Metallgehalt aufweisen.

Die Erfindung betrifft demgemäß ein Verfahren zur Katalysierung von durch Umesterung und/oder Umamidierung und/oder Umurethanisierung und/oder Reaktion endständiger Doppelbindungen vernetzbarer kationischer Lackbindemittel durch Zinnverbindungen, welches dadurch gekennzeichnet ist, daß dem kationischen Lackmaterial als Katalysator Kondensationsprodukte aus Dialkylzinnoxid und Verbindungen, die mindestens eine Hydroxylgruppe aufweisen, zugesetzt werden.

Die Erfindung betrifft weiters die nach diesem Verfahren katalysierten kationischen Lackmaterialien, insbesondere nach diesem Verfahren katalysierte Elektrotauchmaterialien (KTL-Bäder).

Die für das erfindungsgemäße Verfahren eingesetzten Katalysatoren sind auch in der Kälte mit den verschiedenen kationischen Materialien auf der Basis von Kondensations-, Polymerisations- und Polyadditionsharzen einwandfrei verträglich. Durch ihre organophilen Molekülsegmente verbleiben sie im verdünnten wäßrigen Lackmaterial in der Harzphase und damit auch in einem durch die Endosmose bei der Elektrotauchlackierung weitgehend entwässerten Film. Die Produkte unterliegen bei der Lagerung bzw. in der Elektrotauchlackieranlage keiner störenden hydrolytischen Spaltung. Die gegebenenfalls beim Einbrennen auftretenden Spaltprodukte sind flüchtig und ökologisch harmlos.

Als Zinn(IV)-verbindungen werden Dialkylzinnoxide, vorzugsweise das handelsübliche Dibutylzinnoxid eingesetzt.

Als Hydroxylverbindungen werden aliphatische Alkohole, vorzugsweise solche mit mehr als 4 C-Atomen, oder Phenole eingesetzt.

Soferne die eingesetzten Hydroxylverbindungen zusätzlich Aminogruppen aufweisen, können die Produkte durch Protonierung in eine wasserverdünnbare Form überführt werden. In diesem Fall ist eine unmittelbare Zugabe zu verdünnten Lackmaterialien möglich. Als Hydroxyl- und Aminogruppen tragende Verbindungen werden Alkanolamine oder vorteilhaft Umsetzungsprodukte von primären Aminen mit Monoepoxidverbindungen eingesetzt. Als besonders günstig haben sich dabei lösliche Umsetzungsprodukte von Monoalkanolaminen oder Alkylmono- oder -diaminen mit den handelsüblichen Glycidylestern von Fettsäuren, insbesonders solchen der sogenannten KOCH-Säuren erwiesen.

Die Umsetzung der Hydroxylverbindung und der Zinnverbindung erfolgt bei 100 bis 200°C, wobei das Reaktionswasser durch azeotrope Destillation mit Hilfe eines Schleppmittels entfernt wird.

Die erfindungsgemäß verwendeten Katalysatorverbindungen können dem Lackmaterial zu jedem Zeitpunkt der Herstellung des Lackes zugesetzt werden. Die Zugabe kann in konzentrierter Form zum Bindemittel, zu einem eventuell eingesetzten Pigmentanreibeharz oder zur Pigmentpaste erfolgen, wobei gegebenenfalls die Protonierung zusammen mit dem Bindemittel erfolgt. Die Verbindungen können aber auch, soferne sie protonisierbare Gruppen tragen, in neutralisierter und mit Wasser und/oder Hilfslösemittel verdünnter Form dem verdünnten Lackmaterial zugesetzt werden. Bei der Elektrotauchlackierung kann in diesem Fall die verdünnte wäßrige Lösung auch während des Betriebes dem Badmaterial zugesetzt werden.

Lackbindemittel, welche mit Hilfe des erfindungsgemäßen Verfahrens katalysiert werden können, sind in großer Zahl aus der Literatur bekannt. Ein näheres Eingehen auf den Aufbau und die Chemie dieser Produkte ist daher nicht notwendig.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

## Herstellung der Katalysatorverbindungen

Entsprechend den in der Tabelle 1 angegebenen Mengenverhältnissen werden die Hydroxylkomponente und die Zinnverbindung bei der angegebenen Temperatur reagiert, bis die berechnete Menge an Reaktionswasser mit Hilfe eines Schleppmittels (Toluol, Xylol) durch azeotrope Destillation abgetrennt ist. Das Schleppmittel wird dann unter Vakuum abdestilliert und die Katalysatorverbindung gegebenenfalls in einem geeigneten Lösemittel, vorzugsweise Methoxypropanol, gelöst.

Tabelle 1

| Katalysator | Dibutylzinnoxid Tle | Hydroxylverbindung Tle | Reaktionstemp. °C | % Festkörpergehalt/ % Sn im Feststoff |
|---|---|---|---|---|
| K 1 | 249 | 220 Nonylphenol | 120 | 100/26 |
| K 2 | 249 | 260 2-Ethylhexanol | 140 | 100/24 |
| K 3 | 249 | 311 Hydroxyamin I | 130 | 90/22 |
| K 4 | 498 | 616 Hydroxyamin II | 200 | 80/22 |

Hydroxyamin I: Umsetzungsprodukt aus 1 Mol Monoethanolamin und 1 Mol CARDURA E 10 (Monoglycidylester einer $C_9$–$C_{11}$–Kochsäure); MG 311

Hydroxyamin II: Umsetzungsprodukt aus 1 Mol 1,6-Hexamethylendiamin und 2 Mol CARDURA E 10 (Monoglycidylester einer $C_9$–$C_{11}$–Kochsäure); MG 616

## Herstellung der Lackbindemittel

BM 1: In einem geeigneten Reaktionsgefäß werden 220 Tle Nonylphenol (1 Mol) mit 130 Tlen Diethylaminopropylamin (1 Mol) und 100 Tlen Toluol auf 75°C erwärmt und dem Ansatz anschließend unter leichtem Kühlen 33 Tle Paraformaldehyd, 91 % (1 Mol) zugefügt. Die Temperatur wird langsam gesteigert, bis sich eine zügige azeotrope Destillation einstellt. Nach Abtrennen von 21 Tlen Reaktionswasser wird das Toluol im Vakuum abdestilliert und das Produkt in 167 Tlen Diethylenglykoldimethylether gelöst.

Die so erhaltene Lösung wird bei 30 bis 40°C unter Kühlung mit 304 Tlen (1,0 Mol) eines mit 2-Ethylhexanol halbblockierten Toluylendiisocyanats versetzt und die Temperatur von 40°C 1,5 Stunden bis zu einem NCO-Wert von praktisch 0 gehalten.

Anschließend werden 475 Tle eines Epoxidharzes auf Basis von Bisphenol A (Epoxidäquivalentgewicht 475) in 200 Tlen Propylenglykolmonomethylether gelöst und nach Zusatz von 835 Tlen des oben hergestellten Vorproduktes bei 95 bis 100°C bis zu einem Epoxidwert von praktisch 0 reagiert.

BM 2: 500 Tle eines Epoxidharzes auf Basis von Bisphenol A (Epoxidäquivalentgewicht ca. 500) werden in 214 Tlen Propylenglykolmonomethylether gelöst und bei 110°C mit 83 Tlen eines Halbesters aus Phthalsäureanhydrid und 2-Ethylhexanol in Gegenwart von 0,5 Tlen Triethylamin als Katalysator bis zu einer Säurezahl von weniger als 3 mg KOH/g reagiert. Dann werden 120 Tle eines NH-funktionellen O_xazolidins aus Aminoethylethanolamin,2-Ethylhexylacrylat und Formaldehyd, sowie 26 Tle Diethylaminopropylamin zugefügt und der Ansatz bei 80°C bis zu einem Epoxidwert von praktisch 0 reagiert. Der Ansatz wird mit 200 Tlen Propylenglykolmonomethylether verdünnt. 70 Tle (Festharz) dieses oxazolidinmodifizierten Epoxidharz-Aminadduktes werden mit 30 Tlen (Festharz) der nachfolgend beschriebenen Vernetzungskomponente 30 Minuten bei 50°C homogenisiert. Die Vernetzungskomponente wird durch Umsetzung von 1 Mol eines mit 2-Ethylhexanol halbblockierten Toluylendiisocyanats mit 0,33 Mol Triethanolamin hergestellt. Die Reaktion erfolgt in 70%iger Lösung in Diethylenglykoldimethylether bei 50 bis 60°C bis zur vollständigen Umsetzung der Isocyanatgruppen.

BM 3: 75 Tle des bei BM 2 beschriebenen Addukts werden mit 25 Tlen einer Vernetzungskomponente entsprechend "Komponente B 2" gemäß AT-PS 372 099 bei 70°C 1 Stunde homogenisiert. Diese Vernetzungskomponente ist ein Umesterungsprodukt aus 396 Tlen Malonsäuredimethylester und 134 Tlen Trimethylolpropan. Die Umsetzung erfolgt in Gegenwart von 1,1 Tlen Zinkoctoat bei 130°C bis eine Hydroxylzahl von weniger als 20 mg KOH/g erreicht ist.

BM 4: In einem mit Rührer, Thermometer und Rückflußkühler ausgestatteten Reaktionsgefäß werden 1000 Tle eines Epoxidharzes auf Bisphenol A-Basis (Epoxidäquivalent ca. 500) in 492 Tlen Ethylglykolacetat bei 60 bis 70°C gelöst, 0,2 Tle Hydrochinon und 144 Tle Acrylsäure zugegeben und die Temperatur auf 100 bis 110°C gesteigert. Die Reaktion wird bei dieser Temperatur bis zu einer Säurezahl von unter 5 mg KOH/g geführt. Anschliessend wird das Reaktionsprodukt bei 60 bis 70°C mit 652 Tlen eines Monoisocyanates aus 1 Mol Toluylendiisocyanat und 1 Mol Diethylethanolamin (70%ig in Methylisobutylketon) versetzt und bis zu einem NCO-Wert von praktisch Null reagiert.

Beispiele 1 bis 6: Gemäß den in der Tabelle 2 gemachten Angaben werden Klarlacke hergestellt:

Tabelle 2

| Beispiel | Bindemittel 100 Tle Festharz | mMol Ameisensäure (pro 100 Tle FH) | Katalysatorverbindung % Sn | Festkörpergehalt Klarlack in % |
|---|---|---|---|---|
| 1 | BM 1 | 50 | 0,7 K 1 | 14 |
| 2 | BM 1 | 50 | 0,8 K 2 | 15 |
| 3 | BM 2 | 40 | 1,0 K 3 | 12 |
| 4 | BM 2 | 40 | 0,8 K 4 | 12 |
| 5 | BM 3 | 40 | 0,5 K 2 | 15 |
| 6 | BM 4 | 60 | 0,6 K 1 | 14 |

Die mit deionisiertem Wasser auf den angegebenen Festkörpergehalt verdünnten Klarlacke sind klar und sedimentationsstabil.

Vergleichsbeispiel: In gleicher Weise wird aus dem Bindemittel BM 2 durch Zugabe von 1,0 Tlen (Metall) Dibutylzinndilaurat und Verdünnen mit deionisiertem Wasser ein Klarlack hergestellt. Der Vergleichslack ist trübe und zeigt nach 3 Tagen bereits deutliche Sedimentation.

In der Tabelle 3 sind die Eigenschaften von Filmen, die aus den beispielsgemäßen Klarlacken auf entfettetem Stahlblech elektrisch abgeschieden wurden, sowie die Stabilität der Lacke beim Rühren zusammengefäßt. Die Filme wurden 25 Minuten bei der angegebenen Temperatur eingebrannt. Die Methylethylketonbeständigkeit (MEK-rubs) wurde nach 24 Stunden geprüft. Die Rührstabilität wird als Zeit (in Wochen) angegeben, nach welcher deutliche Veränderungen in den Filmeigenschaften erkennbar sind.

Tabelle 3

| Beispiel | Einbrenntemperatur °C | MEK-rubs | Rührstabilität Wochen | Film nach Rührtest |
|---|---|---|---|---|
| 1 | 160 | über 200 | über 8 | unverändert |
| 2 | 160 | über 200 | über 8 | unverändert |
| 3 | 180 | 180 | 8 | leicht wellig, klar |
| 4 | 180 | 200 | über 8 | unverändert |
| 5 | 160 | über 200 | 7 | unverändert |
| 6 | 170 | 180 | 5 | leicht wellig, klar |
| V | 180 | 180 | 1 | stark wellig, trüb |

## Patentansprüche

1. Verfahren zur Katalysierung von durch Umesterung und/oder Umamidierung und/oder Umurethanisierung und/oder Reaktion endständiger Doppelbindungen vernetzbarer kationischer Lackbindemittel durch Zinnverbindungen, dadurch gekennzeichnet, daß dem kationischen Lackmaterial als Katalysator Kondensationsprodukte aus Dialkylzinnoxid und Verbindungen, die mindestens eine Hydroxylgruppe aufweisen, zugesetzt werden.

2. Verfahren nach Anspruch 1, dadurch gekennzeichnet, daß man als Hydroxylverbindung einen aliphatischen Alkohol, vorzugsweise mit mehr als 4 C-Atomen, oder ein Phenol einsetzt.

3. Verfahren nach Anspruch 1, daduch gekennzeichnet, daß man als Hydroxylverbindung ein Alkanolamin einsetzt.

4. Verfahren nach Anspruch 1, dadurch gekennzeichnet, daß man als Hydroxylverbindung ein lösliches Umsetzungsprodukt aus primären Aminen, vorzugsweise Monoalkanolaminen und/oder Alkylmonoaminen und/oder Alkylendiaminen, mit Monoepoxidverbindungen einsetzt.

5. Verfahren nach den Ansprüchen 1 bis 4, dadurch gekennzeichnet, daß man basische Gruppen tragende Katalysatorverbindungen in protonisierter und gegebenenfalls mit Wasser verdünnter Form dem Lackmaterial zusetzt.

6. Gemäß den Ansprüchen 1 bis 5 katalysiertes kationisches, gegebenenfalls elektrisch abscheidbares Lackmaterial.

## Claims

1. Process for catalysing, by compounds of tin, cationic paint binders crosslinkable by transesterification and/or transamidation and/or transurethanizatin and/or reaction of terminal double bonds, characterized in that condensation products obtained from dialkyltin oxide and compounds comprising at least one hydroxyl group are added to the cationic paint material as catalyst.

2. Process according to Claim 1, characterized in that an aliphatic alcohol, preferably one of more than 4 carbon atoms, or a phenol is used as the hydroxyl compound.

3. Process according to Claim 1, characterized in that an alkanolamine is used as the hydroxyl compound.

4. Process according to Claim 1, characterized in that a soluble reaction product of primary amines, preferably monoalkanolamines and/or alkylmonoamines and/or alkylenediamines, with monoepoxide compounds is used as the hydroxyl compound.

5. Process according to Claims 1 to 4, characterized in that catalyst compounds comprising basic groups are added in protonized and, if appropriate, in water-diluted form, to the paint material.

6. Cationic paint material, if desired electrically depositable paint material, catalysed according to Claims 1 to 5.

## Revendications

1. Procédé pour catalyser par des composés de l'étain la reticulation de liants cationiques pour peinture qui sont réticulables par transestérification et/ou transamidation et/ou transuréthanisation et/ou par réaction de doubles liaisons terminales, caractérisé en ce que l'on ajoute comme catalyseur au produit cationique pour peinture des produits de condensation d'oxyde de dialkylétain et de composés qui présentent au moins un groupe hydroxyle.

2. Procédé selon la revendication 1, caractérisé en ce que l'on utilise comme composé hydroxylé un alcool aliphatique, de préférence ayant plus de 4 atomes de carbone, ou un phénol.

3. Procédé selon la revendication 1, caractérisé en ce que l'on utilise une alcanolamine comme composé hydroxylé.

4. Procédé selon la revendication 1, caractérisé en ce que l'on utilise comme composé hydroxylé un produit de réaction soluble d'amines primaires, de préférence de monoalcanolamines et/ou d'alkylmonoamines et/ou d'alkylènediamines, avec des composés monoépoxydés.

5. Procédé selon les revendications 1 à 4, caractérisé en ce que l'on ajoute au produit pour peinture des composés catalytiques portant des groupes basiques sous forme protonée et éventuellement diluée à l'eau.

6. Produit pour peinture cationique catalysé selon les revendications 1 à 5, éventuellement précipitable électriquement.